# EUROPEAN PATENT APPLICATION

(11) **EP 2 421 226 A1**
(43) Date of publication of application: **22.02.2012**
(21) Application number: 10838396.9
(22) Date of filing: 06.09.2010
(51) Int. Cl.: H04L 29/08, H04L 12/58, H04N 7/24

(54) **METHOD OF P2P VIDEO COMMUNICATION IMPLEMENTED ON WEB PAGE**

(30) Priority: 02.07.2010 CN 201010223730
(71) Applicant: Suzhou Codyy Network Science &Technology Co., Ltd., Jiangsu 215021 (CN)
(72) Inventor: HU, Jiaming, Suzhou, Liangsu 215021 (CN)
(74) Representative: Bokinge, Ole
(86) International application number: PCT/CN2010/076644
(87) International publication number: WO 2012/000227

(57) **Abstract**

The present invention belongs to the field of network technology, and in particular, relates to a method for implementing p2p video communication on webpage, which includes the following steps: a user accessing a webpage, loading a flash, and a webpage script calling the flash interface to connect to a socket server; the flash connecting to a stratus server to acquire a key and monitoring received messages; the flash sending the user name and the key to the socket server to store; the flash of the source user and the flash of the target user establishing a direct connection by using the key; the source user and the target user acquiring a video source of a local camera respectively, sending the video source to the counterpart through the established connection, and meanwhile, acquiring and displaying the video stream from the counterpart. The method can realize p2p based video communication on webpage, which not only largely saves the bandwidth cost of the operator, but also greatly improves the smoothness of the video communication between users.

## Description

### Technical Field

The present invention belongs to the field of network technology, and in particular, relates to a method for implementing p2p video communication on webpage.

### Background of the Invention

With the development of internet technology, we can implement instant messaging, such as chatting with friends and negotiating with partners, without even leaving home. Nowadays, instant messaging tools such as MSN, QQ or POPO which need to be downloaded and installed are more and more popular since they offer new ways for people to communicate and exchange information, and they become another important information exchanging mechanism besides cell phone, fixed phone and email. With these tools, a user can have video communication with one party or multiple parties, and can have network video conference and online remote education. The tools greatly decrease the cost of communication between people and improve the efficiency. However, in order to use those instant messaging tools, the user must download and install the corresponding client software, which is a very complicated process of configuration and getting familiar with. It is difficult for those users who have never used such kind of tools before and those who do not use computer often. Moreover, the size of instant messaging tools downloaded by client is more and more larger now, for example, the size of QQ2010 reaches 32.6MB, and the size of MSN reaches 11.2MB, thus they occupy large storage space in computer; meanwhile, network security problems brought about by downloading also bother the users; in addition, as all data information (such as chatting records) is saved in the terminal computer, once the computer is replaced (e.g., because of a business trip) or the software is reinstalled, the user can't acquire the original data information, which is very inconvenient. Therefore, users have such a demand: instant messaging can be implemented once a webpage is opened, without downloading or installing any software; and all data information can be safely saved on the webpage. So far, some communication mechanisms on webpage have emerged in the network, e.g., message board and BBS, but they have a common disadvantage that the instantaneity is poor and audio or video on webpage can not be realized, thus the requirement of instant communication of people can not be met. Although some software (such as fms or red5) have realized video chatting on webpage without downloading the installation software at present, they cannot well implement peer-to-peer video communication and cannot utilize users' bandwidth resource, which brings great pressure on the server and bandwidth of the platform provider, and causes the operating cost to increase significantly as the increase of the user quantity; as a result, the operating scale and service scope of these software are limited, and these software do not have the condition of large scale application and spreading. So far, there has been no webpage video or audio product or company that possesses a certain market scale emerged.

Therefore, there is a need to research and develop a method for implementing p2p (peer-to-peer) based video communication to realize instant messaging on webpage, which can utilize users' idle bandwidth resource to the most extent on the premise of no downloading by the client and high instantaneity, so as to decreases the pressure on the server and bandwidth of the platform.

### Summary of the Invention

An object of the present invention is to provide a method for implementing p2p video communication on webpage.

In order to achieve the above object, a technical scheme of the present invention is: a method for implementing p2p video communication on webpage, comprising the following steps:
1) a user accessing a webpage and calling a flash interface to connect to a socket server; the flash connecting to a stratus server and acquiring a key, establishing a connection Netconnection and monitoring received messages, wherein Netconnection is a variable name; the flash sending a user name and the key of the user to the socket server, and the socket server storing the user name and the key of the user; a javascript code on the webpage of the source user calling the flash interface to send a message containing a user name of a target user to the socket server; the socket server receiving the message from the source user, and returning a key corresponding to the user name of the target user to the flash on the webpage of the source user; the flash on the webpage of the source user sending a video invitation message to the target user via the Netconnection and the key of the target user, and after the target user receives the message, the target user loading a flash, name of which is set as target_video_flash, for playing video on a webpage of the target user; the target_video_flash connecting to the stratus server and acquiring a new key, connecting to the socket server and storing the new key and the user name of the target user on the socket server; the target user sending the user name of the source user to the socket server, and the socket server returning a new key corresponding to the user name of the source user to the target_video_flash of the target user; after the target_video_flash receives the key returned by the socket server, the target_video_flash starting to play a video stream corresponding to the key via the Netconnection and the key, and meanwhile, the target user sending a local camera video stream to the flash of the source user via the Netconnection;
2) the target user sending a video communication agreed message to the source user via the Netconnection;
3) after the source user receives the video agreed message from the target user, the source user loading a flash, name of which is set as source_video_flash, for playing video on the webpage of the source user; the source_video_flash connecting to the stratus server and acquiring a new key, connecting to the socket server and storing the new key and the user name of the target user on the socket server; the source user sending the user name of the target user to the socket server, and the socket server returning the new key corresponding to the user name of the target user to the source_video_flash of the source user; after the source_video_flash receives the key returned by the socket server, the source_video_flash starting to play a video stream corresponding to the key via the Netconnection and the key of the target user, and meanwhile, the source user sending a local camera video stream to the flash of the target user via the Netconnection of the source user.

In the above technical scheme, step 1) comprises the following procedures:
1a) the user accessing the webpage and calling the flash interface to connect to the socket server;
1b) the flash stratus server acquiring the key, establishing the connection Netconnection, wherein Netconnection is a variable name, and monitoring received messages;
1c) the flash sending the user name and the key of the source user to the socket server, and the socket server storing the user name and the key of the source user;
1d) the javascript code on the webpage of the source user calling the flash interface to send a message containing the user name of the target user to the socket server; the socket server receiving the message from the source user, and returning the key corresponding to the user name of the target user to the flash on the webpage of the source user;
1e) the flash on the webpage of the source user sending a video invitation message to the target user via the Netconnection and the key of the target user; after the target user receives the message, the target user loading a flash, name of which is set as target_video _flash, for playing video on the webpage of the target user; the target_video_flash connecting to the stratus server and acquiring a new key, connecting to the socket server and storing the new key and the user name of the target user on the socket server;
1f) the target user sending the user name of the source user to the socket server, and the socket server returning the new key corresponding to the user name of the source user to the target_video_flash of the target user; after the target_video_flash receives the key returned by the socket server, the target_video_flash starting to play the video stream corresponding to the key via the Netconnection and the key, and meanwhile, the target user sending the local camera video stream to the flash of the source user via the Netconnection.

In the above technical scheme, step 2) comprises the following procedure: the target user sending the video communication agreed message to the source user via the Netconnection.

In the above technical scheme, step 3) comprises the following procedures:
3a) after the source user receives the video agreed message from the target user, the source user loading a flash, name of which is set as source_video_flash, for playing video on the webpage of the source user; the source_video_flash connecting to the stratus server and acquiring a new key, connecting to the socket server and storing the new key and the user name of the target user on the socket server;
3b) the socket server receiving the message from the source user, and returning the key corresponding to the user name of the target user to the flash on the webpage of the source user;
3c) the flash on the webpage of the source user sending the video invitation message to the target user via the Netconnection and the key of the target user.

In the above technical scheme, step 4) comprises the following procedures:
4a) after the flash of the target user receives the message, the flash calling a script code interface on the webpage to load a flash, name of which is set as target_video_flash, for playing video on the webpage of the target user;
4b) the target_video _flash connecting to the stratus server and acquiring a new key, connecting to the socket server and storing the new key and the user name of the target user on the socket server;
4c) the target user sending the user name of the source user to the socket server, and the socket server returning the new key corresponding to the user name of the source user to the target_video_flash of the target user;
4d) after the target_video_flash receives the key returned by the socket server, the target_video_flash starting to play the video stream corresponding to the key via the Netconnection and the key; the target user sending the local camera video stream to the flash of the source user via the Netconnection, and the target user sending the video communication agreed message to the source user via the Netconnection.

Due to the application of the above technical scheme, compared with the prior art, the present invention has the following advantages:
1) Users can implement instant messaging on webpage without downloading any software, which saves storage space in the computer and avoids many inconveniences.
2) Have good instantaneity and no delay.
3) Can be used in any network terminal including PC.
4) Largely reduce the pressure on server, save the bandwidth and greatly reduce the operating cost due to the p2p technology applied.

### Brief Description of the Drawings

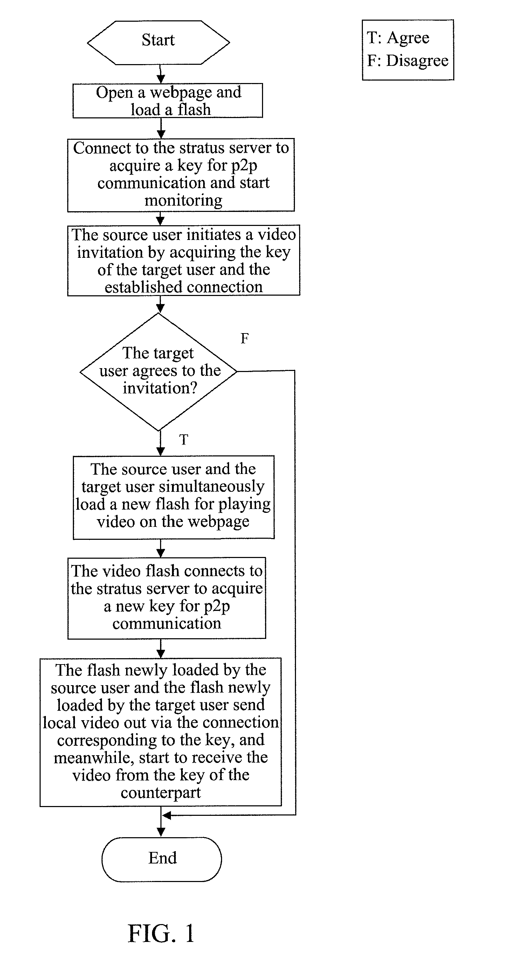

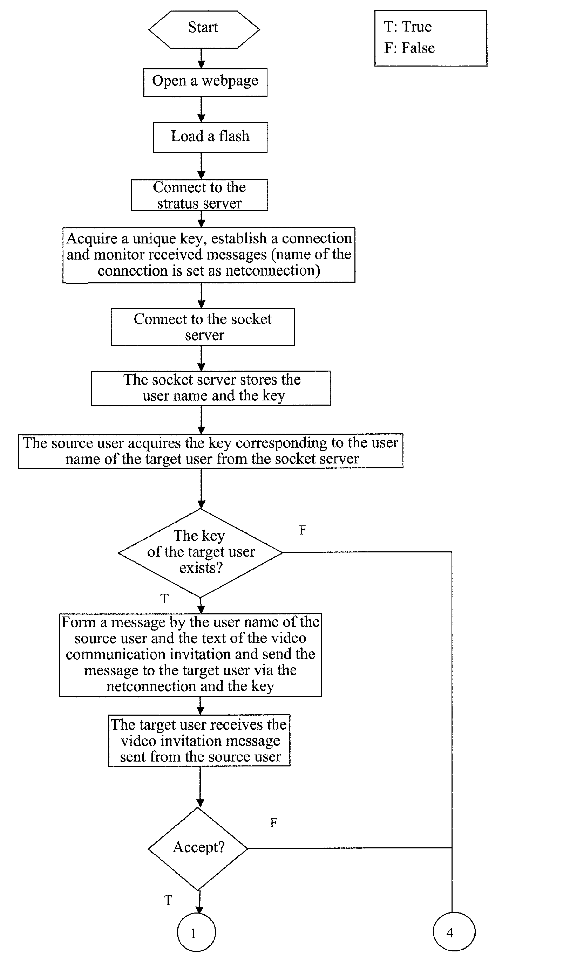

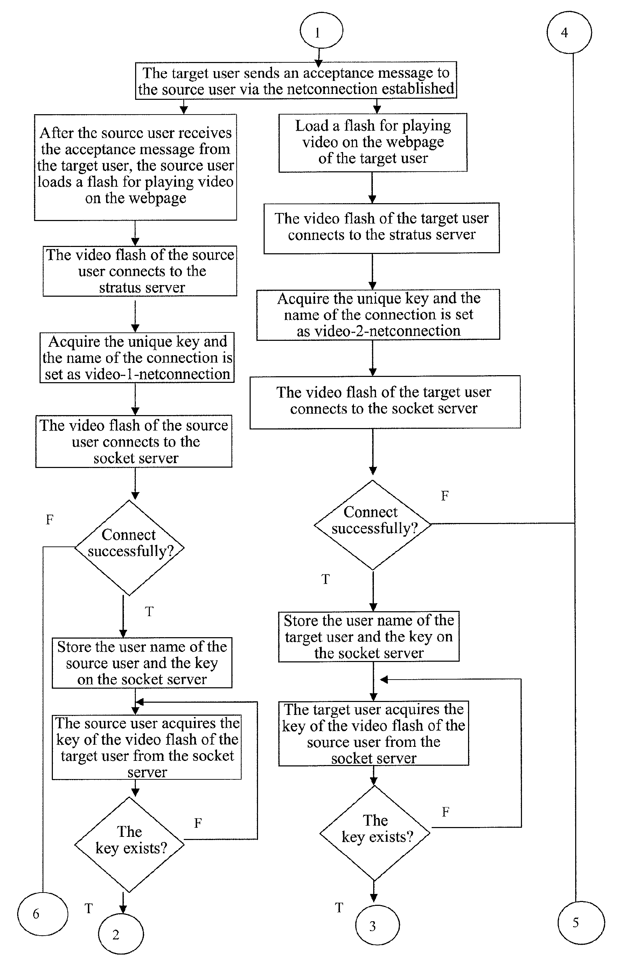

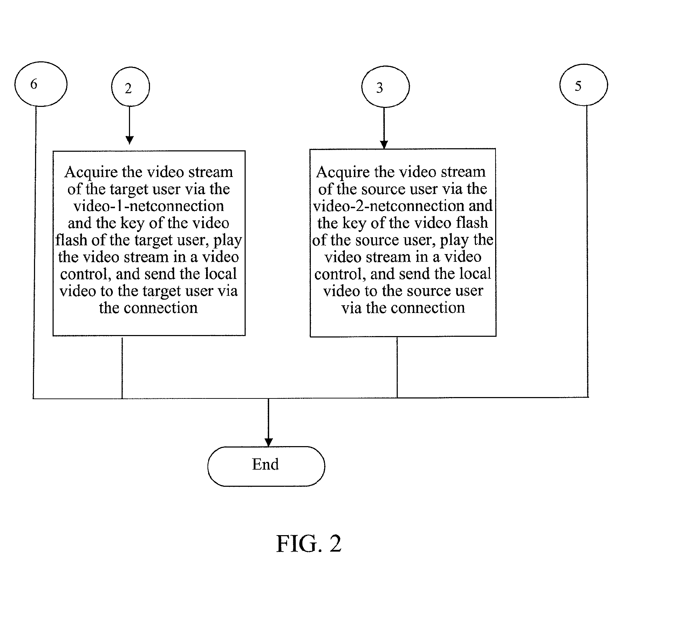

FIG. 1 and FIG. 2 are detailed flow charts of the embodiments of the present invention.

### Preferred Embodiments of the Present Invention

The present invention is further explained below in conjunction with the drawings and embodiments.

Embodiment l: a method for implementing instant messaging on webpage includes the following steps:
1) A user accesses a webpage, calls a flash interface to connect a socket server. The flash stratus server acquires a key, establishes a connection Netconnection and monitors received messages, wherein Netconnection is a variable name. The flash sends the user name and key of the source user to the socket server, and the socket server stores the user name and key of the source user. The javascript code on the webpage of the source user calls the flash interface and sends a message containing the user name of the target user to the socket server; after the socket server receives the message from the source user, it returns the key corresponding to the user name of the target user to the flash on the webpage of the source user. The flash on the webpage of the source user sends a video invitation message to the target user via the Netconnection and the key of the target user, and after the target user receives the message, the target user loads a flash, name of which is set as target_video_flash, for playing video on the webpage of the target user. The target_video_flash connects to the stratus server and acquires a new key, connects to the socket server and stores the new key and the user name of the target user on the socket server. The target user sends the user name of the source user to the socket server, and the socket server returns the new key corresponding to the user name of the source user to the target_video_flash of the target user. After the target_video_flash receives the key returned by the socket server, it starts to play the video stream corresponding to the key via the Netconnection and the key, and meanwhile, the target user sends the local camera video stream to the flash of the source user via the Netconnection.
2) The target user sends a video communication agreed message to the source user via the Netconnection.
3) After the source user receives the video agreed message from the target user, the source user loads a flash, name of which is set as source_video_flash, for playing video on the webpage of the source user. The source_video_flash connects to the stratus server and acquires a new key, connects to the socket server and stores the new key and the user name of the target user on the socket server. The source user sends the user name of the target user to the socket server, and the socket server returns the new key corresponding to the user name of the target user to the source_video_flash of the source user. After the source_video_flash receives the key returned by the socket server, it starts to play the video stream corresponding to the key via the Netconnection and the key of the target user, and meanwhile, the source user sends the local camera video stream to the flash of the target user via the Netconnection of the source user.

The method of the present invention will further be described in detail below:

With reference to FIG. 1 and FIG. 2, the source user inputs his/her personal webpage address in the browser to reach his/her personal webpage, or reaches the personal webpage by link; the source user inputs the account and password to log in his/her personal webpage, and if the login is successful, the account is used as the communication account; if the source user does not log in, the system will assign the source user a temporary communication account. The client script program calls a flash interface to connect to the socket server and establishes a connection. The flash connects to the stratus server and acquires a key, establishes a connection Netconnection, wherein Netconnection is a variable name, and starts to monitor received messages. Meanwhile, the flash sends the user name and key of the source user to the socket server, and the socket server stores the user name and key of the source user. The javascript code on the webpage of the source user calls the flash interface and sends the user name of the target user to the socket server. The socket server receives the message from the source user and returns the key corresponding to the user name of the target user to the flash on the webpage of source user. The javascript program on the webpage of the source user calls the flash interface, and the flash sends a video invitation message to the flash on the webpage of the target user via the Netconnection and the key of the target user. After the flash on the webpage of the target user receives the message, it calls a script program interface to load a flash on the webpage of the target user. The flash of the target user requests from the socket server the key corresponding to the user name of the source user, and after the flash of the target user receives the key, the flash starts to receive and play the video sent from the source user, and meanwhile, sends the local camera video to the source user via the Netconnection and sends a video agreed message to the source user. The source user receives the message from the target user, and loads a flash on the webpage of the source user. The flash of the source user requests from the socket server the key corresponding to the user name of the target user, and after the flash of the source user acquires the key, the flash starts to receive and play the video sent from the target user, and meanwhile, sends the local camera video to the target user via the Netconnection and the key corresponding to the target user.

## Claims

1. A method for implementing p2p video communication on webpage, comprising the following steps:
1) a user accessing a webpage and calling a flash interface to connect to a socket server; the flash connecting to a stratus server and acquiring a key, establishing a connection Netconnection and monitoring received messages, wherein Netconnection is a variable name; the flash sending a user name and the key of the user to the socket server, and the socket server storing the user name and the key of the user; a javascript code on the webpage of the source user calling the flash interface to send a message containing a user name of a target user to the socket server; the socket server receiving the message from the source user, and returning a key corresponding to the user name of the target user to the flash on the webpage of the source user; the flash on the webpage of the source user sending a video invitation message to the target user via the Netconnection and the key of the target user, and after the target user receives the message, the target user loading a flash, name of which is set as target_video_flash, for playing video on a webpage of the target user; the target_video_flash connecting to the stratus server and acquiring a new key, connecting to the socket server and storing the new key and the user name of the target user on the socket server; the target user sending the user name of the source user to the socket server, and the socket server returning a new key corresponding to the user name of the source user to the target_video_flash of the target user; after the target_video_flash receives the key returned by the socket server, the target_video_flash starting to play a video stream corresponding to the key via the Netconnection and the key, and meanwhile, the target user sending a local camera video stream to the flash of the source user via the Netconnection;
2) the target user sending a video communication agreed message to the source user via the Netconnection;
3) after the source user receives the video agreed message from the target user, the source user loading a flash, name of which is set as source_video_flash, for playing video on the webpage of the source user; the source_video_flash connecting to the stratus server and acquiring a new key, connecting to the socket server and storing the new key and the user name of the target user on the socket server; the source user sending the user name of the target user to the socket server, and the socket server returning the new key corresponding to the user name of the target user to the source_video_flash of the source user; after the source_video_flash receives the key returned by the socket server, the source_video_flash starting to play a video stream corresponding to the key via the Netconnection and the key of the target user, and meanwhile, the source user sending a local camera video stream to the flash of the target user via the Netconnection of the source user.

2. The method as claimed in claim 1, wherein step 1) comprises the following procedures:
1a) the user accessing the webpage and calling the flash interface to connect to the socket server;
1b) the flash stratus server acquiring the key, establishing the connection Netconnection, wherein Netconnection is a variable name, and monitoring received messages;
1c) the flash sending the user name and the key of the source user to the socket server, and the socket server storing the user name and the key of the source user;
1d) the javascript code on the webpage of the source user calling the flash interface to send a message containing the user name of the target user to the socket server; the socket server receiving the message from the source user, and returning the key corresponding to the user name of the target user to the flash on the webpage of the source user;
1e) the flash on the webpage of the source user sending a video invitation message to the target user via the Netconnection and the key of the target user; after the target user receives the message, the target user loading a flash, name of which is set as target_video_flash, for playing video on the webpage of the target user; the target_video_flash connecting to the stratus server and acquiring a new key, connecting to the socket server and storing the new key and the user name of the target user on the socket server;
1f) the target user sending the user name of the source user to the socket server, and the socket server returning the new key corresponding to the user name of the source user to the target_video_flash of the target user; after the target_video_flash receives the key returned by the socket server, the target_video_flash starting to play the video stream corresponding to the key via the Netconnection and the key, and meanwhile, the target user sending the local camera video stream to the flash of the source user via the Netconnection.

3. The method as claimed in claim 1, wherein step 3) comprises the following procedures:
3a) after the source user receives the video agreed message from the target user, the source user loading a flash, name of which is set as source_video_flash, for playing video on the webpage of the source user; the source_video_flash connecting to the stratus server and acquiring a new key, connecting to the socket server and storing the new key and the user name of the target user on the socket server;
3b) the socket server receiving the message from the source user, and returning the key corresponding to the user name of the target user to the flash on the webpage of the source user;
3c) the flash on the webpage of the source user sending the video invitation message to the target user via the Netconnection and the key of the target user;
3d) after the flash of the target user receives the message, the flash calling a script code interface on the webpage to load a flash, name of which is set as target_video_flash, for playing video on the webpage of the target user;
3e) the target_video_flash connecting to the stratus server and acquiring a new key, connecting to the socket server and storing the new key and the user name of the target user on the socket server;
3f) the target user sending the user name of the source user to the socket server, and the socket server returning the new key corresponding to the user name of the source user to the target_video _flash of the target user;
3g) after the target_video_flash receives the key returned by the socket server, the target_video_flash starting to play the video stream corresponding to the key via the Netconnection and the key; the target user sending the local camera video stream to the flash of the source user via the Netconnection; the target user acquiring video via the Netconnection and outputting the video to the flash on a client of the target user to display, and meanwhile, the source user also acquiring video via the Netconnection and outputting the video to the flash on a client of the source user to display.

4. The method as claimed in claim 1, wherein the user connects to the stratus server and acquires the key for communication, the flash on the webpage of the user establishes the connection by using the key, after the connection is established, the target user and the source user load a flash for playing camera video respectively, and the video flash plays the video corresponding to the key of the counterpart respectively and sends the local video to the counterpart via the connection established by the video flash.
